# EUROPÄISCHE PATENTSCHRIFT

(11) **EP 4 203 387 B1**
(45) Veröffentlichungstag und Bekanntmachung des Hinweises auf die Patenterteilung: **02.10.2024**
(21) Anmeldenummer: 21217124.3
(22) Anmeldetag: 22.12.2021
(51) Int. Cl.: H04L 9/40, H04W 12/069, H04W 12/72

(54) **VERFAHREN UND SYSTEM ZUR AUTHENTIFIZIERUNG EINES ENDGERÄTS EINES NUTZERS**
METHOD AND SYSTEM FOR AUTHENTICATING A TERMINAL OF A USER
PROCÉDÉ ET SYSTÈME D'AUTHENTIFICATION D'UN TERMINAL D'UN UTILISATEUR

(43) Veröffentlichungstag der Anmeldung: 28.06.2023
(73) Patentinhaber: Deutsche Telekom AG, 53113 Bonn (DE)
(72) Erfinder: MINOW, Jascha, 64625 Bensheim (DE); JAHN, Carl, 65191 Wiesbaden (DE); EL MALLOUKI, Said, 56329 St.Goar (DE)
(74) Vertreter: RDL Patentanwälte PartG mbB

(56) Entgegenhaltungen:
- EP-A1- 1 514 446
- EP-A1- 3 817 278
- EP-B1- 1 514 446
- DE-A1- 102019 100 334

## Beschreibung

Die vorliegende Erfindung betrifft ein Verfahren und ein System zur Authentifizierung eines Endgeräts eines Nutzers bei Nutzung eines von einem Zielsystem über ein Verbindungsnetz bereitgestellten Dienstes.

Sichere und verschlüsselte Verbindungen zwischen einem Kommunikationsendgerät eines Nutzers, im Folgenden kurz Endgerät eines Nutzers, und einem einen Dienst, bspw. einen Webservice bereitstellenden Zielsystem sind heutzutage selbstverständlich und es ist vielmehr eine Ausnahme, wenn eine Verbindung im Internet nicht durch eine TLS (früher SSL https://de.wikipedia.org/wiki/Transport_Layer Security) geschützt ist. Selbst jeweilige Browser auf den jeweiligen Endgeräten verlangen von Webservices und im Speziellen von auf jeweiligen Webservern betriebenen Webseiten eine Verschlüsselung der Daten während einer Übertragung durch sogenannte Zertifikate (https://de.wikipedia.org/wiki/Digitales_Zertifikat). Die Verschlüsselung durch Zertifikate mit Hilfe von TLS stellt sicher, das die Daten verschlüsselt im Internet übertragen werden können und dass der Webservice auch derjenige ist, für den er sich ausgibt (digitale Signatur).

Allerdings stellen die verschlüsselten Verbindungen und die digitale Signatur mit Hilfe von TLS nur sicher, dass eine bestehende Verbindung verschlüsselt und darüber zu übermittelende Daten an den "richtigen" Server übertragen werden für den sich der den jeweiligen Webservice bereitstellende Webserver ausgibt. Weiterhin müssen Webportale darüber hinaus aber immer überprüfen, um welchen Nutzer (User) es sich handelt. Dies passiert heutzutage mit gängigen Sicherheitsfunktionen, wobei Username + Password das übliche Verfahren für einen Login darstellen. Weiterhin bedarf es für besonders kritische Systeme einer offiziellen Legitimationsprüfung (z.B. Post-Ident) eines Users, um wirklich festzustellen, dass eine reale Person, für die sie sich ausgibt, auch einen entsprechenden Webservice für Online Banking nutzen kann.

DE 10 2019 100 334 A1 betrifft ein Verfahren zum sicheren Bereitstellen einer personalisierten elektronischen Identität auf einem Endgerät, die von einem Nutzer zum Identifizieren bei Inanspruchnahme einer Online-Dienstleistung nutzbar ist, wobei bei dem Verfahren in einem System mit Datenverarbeitungseinrichtungen und einem Endgerät, welches einem Nutzer zugeordnet ist, eine Identifikations-Applikation auf dem Endgerät und weiterhin eine Registrierungs-Applikation, eine Personalisierungs-Applikation und eine Identitätsprovider-Applikation ausgeführt werden.

EP 3 817 278 A1 sieht vor, dass, wenn ein Benutzer versucht, eine Übertragungsprozedur oder dergleichen über eine Anwendung durchzuführen, zuerst eine Benutzerauthentifizierung unter Verwendung eines PIN-Codes oder dergleichen angefordert wird und, wenn die Benutzerauthentifizierung erfolgreich ist, eine Funktionseinschränkung auf einem IC-Chip entfernt und ein Modus hergestellt wird, in dem eine durch den IC-Chip bereitgestellte Funktion verfügbar ist.

Nach der einmaligen erfolgreichen Legitimationsprüfung findet aber keine weitere Überprüfung statt, ob eine Anfrage auch wirklich von dem legitimierten User erfolgt und mit welchem Endgerät eine Anfrage vorgenommen wird.

Der Erfindung liegt daher die Aufgabe zugrunde, ein Verfahren zur Authentifizierung eines Endgeräts eines Nutzers bei Nutzung eines von einem Zielsystem über ein Verbindungsnetz bereitgestellten Dienstes vorzuschlagen, bei dem dem Zielsystem bzw. einem Provider des Zielsystems ermöglicht wird, festzustellen, von welchem Endgerät welchen Nutzers eine Anfrage an das Zielsystem bzw. an den bereitgestellten Dienst erfolgt. Ferner ist es eine Aufgabe der Erfindung, ein System zur Authentifizierung eines Endgeräts eines Nutzers bei Nutzung eines von einem Zielsystem über ein Verbindungsnetz bereitgestellten Dienstes bereitzustellen.

Die Erfindung wird in den beigefügten Ansprüchen definiert.

Gemäß einer Ausführungsform des erfindungsgemäßen Verfahrens ist das durch die Zertifikatserstellungseinheit erstellte Zertifikat in einem Private-Public-Key-Verfahren verifizierbar, wobei dem Zertifikat entsprechend ein Private Key (privater bzw. geheimer Schlüssel) und ein Public Key (öffentlicher Schlüssel) zugeordnet werden und die Zertifikatserstellungseinheit zur Verifizierung des erstellten Zertifikats und darüber zur Authentifizierung des Endgeräts des Nutzers den dem erstellten Zertifikat zugeordneten Public Key bereitstellt. Dabei ist der Public Key über eine jeweilige Verbindung zu der Zertifikatserstellungseinheit, insbesondere auf Anfrage, bspw. von dem Zertifizierungsdienst und/oder dem Zielsystem abrufbar. Das Zielsystem kann dabei direkt und/oder über den Zertifizierungsdienst mit der Zertifikatserstellungseinheit verbunden sein. Das Zertifikat wird von der Zertifikatserstellungseinheit auf Basis von bzw. mit Hilfe des Private Keys erstellt, der wiederum auf Basis der von der Anfrage extrahierten Metadaten generiert wird, wobei zumindest ein Teil der im Verbindungsnetz, d. h. insbesondere in der Routingeinheit verfügbaren Metadaten verwendet wird. In Ausgestaltung entspricht das Zertifikat dem Private Key. In weiterer Ausgestaltung entspricht die Signatur, mit der die Anfrage signiert wird. dem Zertifikat.

Durch die Erfindung wird vorgeschlagen, für eine Legitimation von User und Endgerät in Anlehnung an eine Public-Key-Authentifizierung, wie sie bspw. unter dem link https://de.wikipedia.org/wiki/Public-Key-Authentifizierung beschrieben ist, die für einen Netzbetreiber des Verbindungsnetzes, kurz auch Carrier genannt, verfügbaren Verbindungsdaten, d.h. Metadaten und einen eindeutigen Identifikator, zu verwenden, um Zielsystemen, wie bspw. Webportalen die Möglichkeit zu bieten, festzustellen, von welchem Endgerät eines Nutzers/Users eine Anfrage auf deren System erfolgt ist oder nicht, um dadurch Missbrauch von Dritten zu verhindern. Auch wird dadurch die Möglichkeit gegeben, bspw. Internetportalen als Zielsystemen für jede Anfrage bzw. für jeden Request zuzusichern, dass die jeweilige Anfrage bzw. der jeweilige Request genau von dem zu erwartenden Endgerät des Users verschickt wurde. Dabei sind das mit dem Kommunikationsnetz verbundene Endgerät und das Verbindungsnetz, insbesondere der Zertifizierungsdienst, sowie das Verbindungsnetz, insbesondere der Zertifizierungsdienst, und das Zielsystem über jeweilige Daten- und/oder Sprachverbindungen miteinander verbindbar bzw. verbunden. Über derartige Verbindungen erfolgt jegliche Kommunikation zwischen dem Endgerät, dem Verbindungsnetz inklusive der davon umfassten Funktionseinheiten und dem Zielsystem sowie der Zertifikatserstellungseinheit. Im Folgenden wird eine Daten- und/oder Sprachverbindung kurz nur Verbindung genannt.

Bevorzugt wird das Endgerät des Nutzers in dem Zielsystem einmalig legitimiert und/oder zur Nutzung des jeweiligen von dem Zielsystem bereitgestellten Dienstes freigeschaltet. Das bedeutet, dass das Endgerät des Nutzers in dem Zielsystem bekannt ist, insbesondere als dem Nutzer zugeordnetes Endgerät. Dazu wird in möglicher Ausgestaltung der Erfindung der eindeutige Identifikator beim Zielsystem hinterlegt bzw. diesem bereitgestellt bzw. bekannt gemacht.

In weiterer Ausgestaltung des erfindungsgemäßen Verfahrens umfasst die Authentifizierung des die Anfrage aussendenden Endgeräts mittels der Signatur, dass die Signatur einer Prüfung mittels des bereitgestellten Public Keys unterzogen wird und dass das die Anfrage aussendende Endgerät anhand des Prüfungsergebnisses authentifiziert wird.

Gemäß einer Ausführungsform des erfindungsgemäßen Verfahrens übermittelt dabei das Zielsystem zur Prüfung der Signatur eine Prüfungsanfrage an den Zertifizierungsdienst, der Zertifizierungsdienst prüft die Signatur mittels des von der Zertifikatserstellungseinheit bereitgestellten Public Keys, übermittelt an das Zielsystem das Prüfungsergebnis und das Zielsystem authentifiziert anhand des Prüfungsergebnisses das die Anfrage aussendende Endgerät. Dabei übermittelt die Zertifikatserstellungseinheit den Public Key über eine Verbindung an den Zertifizierungsdienst oder der Zertifizierungsdienst ruft den Public Key über eine Verbindung bei der Zertifikatserstellungseinheit ab.

Alternativ dazu oder ergänzend prüft das Zielsystem die Signatur mittels des bereitgestellten Public Keys selbst und authentifiziert anhand des Prüfungsergebnisses das die Anfrage aussendende Endgerät. Dabei wird dem Zielsystem der von der Zertifikatserstellungseinheit bereitgestellte Public Key über den Zertifizierungsdienst oder über eine direkte Verbindung zwischen Zielsystem und Zertifikatserstellungseinheit bereitgestellt bzw. übermittelt oder das Zielsystem ruft den Public Key über eine Verbindung bei der Zertifikatserstellungseinheit ab.

In weiterer Ausgestaltung des erfindungsgemäßen Verfahrens umfasst das Authentifizieren des die Anfrage aussendenden Endgeräts, dass das Zielsystem anhand des Prüfungsergebnisses feststellt, ob das die Anfrage aussendende Endgerät ein zuvor legitimiertes und/oder für den Dienst bzw. Service freigeschaltetes Endgerät ist oder nicht.

Bei der Prüfung der Signatur erfolgt ein Abgleich des für den eindeutigen Identifikator erstellten Zertifikats und des bei dem Zielsystem bereits zuvor legitimierten bzw. für den Dienst freigeschalteten Endgeräts. Dies kann bspw. mit Hilfe eines entsprechenden bzw. des dem bei dem Zielsystem bereits zuvor legitimierten bzw. für den Dienst freigeschalteten Endgerät zugeordneten eindeutigen Identifikators erfolgen.

Gemäß einer weiteren Ausführungsform des erfindungsgemäßen Verfahrens wird das Endgerät des Nutzers als ein mobiles Endgerät mit einer dem Nutzer zugeordneten SIM (Subscriber Identity Module) gewählt, wobei das Kommunikationsnetz, in dem das Endgerät lokalisiert bzw. mit dem das Endgerät verbunden ist, ein Mobilfunknetz ist. Dabei wird der eindeutige Identifikator gewählt als eine dem Endgerät des Nutzers zugeordnete IMSI (International Mobile Subscriber Identity) oder eine dem Endgerät des Nutzers zugeordnete MSISDN oder eine Kombination aus IMSI und MSISDN. Als ein mobiles Endgerät mit einer dem Nutzer zugeordneten SIM ist jedes Endgerät des Nutzers zu verstehen, in das eine die dem Nutzer zugeordnete SIM umfassende SIM-Karte eingesteckt ist oder in das die dem Nutzer zugeordnete SIM als eSIM (embedded SIM) integriert ist.

Die IMSI wird in GSM-, UMTS- und LTE-Mobilfunknetzen zur eindeutigen Identifizierung eines Nutzers als interne Teilnehmerkennung genutzt. Die IMSI ist auf der SIM gespeichert.

Eine MSISDN (Mobile Subscriber Integrated Services Digital Network Number) ist jeweils mindestens einer SIM zugeordnet. Prinzipiell besteht die Möglichkeit, einer MSISDN auch mehrere SIMs zuzuordnen, wobei aber von denen dann jeweils nur eine zu einem Zeitpunkt nutzbar ist. Ferner ist es möglich, dass ein Endgerät über mehrere MSISDNs angesprochen wird, wenn in einem Multi-SIM-Gerät mehr als eine aktive SIM genutzt wird. Eine MSISDN ist eine weltweit eindeutige Rufnummer, welche einer SIM und somit einem Nutzer bzw. dessen die SIM umfassenden Endgerät zugeordnet ist.

Das mobile Endgerät bzw. Mobilgerät kann ein Mobiltelefon bspw. ein Smartphone, ein Tablet-Computer oder ein Personal Digital Assistant (PDA) sein.

Gemäß einer weiteren Ausführungsform der Erfindung ist bzw. wird das Endgerät des Nutzers als ein Festnetzgerät gewählt, wobei das Kommunikationsnetz, in dem das Festnetzgerät lokalisiert ist bzw. mit dem das Festnetzgerät verbunden ist, ein Festnetz ist, und der eindeutige Identifikator gewählt wird als eine Line-ID, die einem Anschluss des Endgeräts an eine Verbindungsstelle (DSLAM) des Festnetzes eindeutig zugeordnet ist.

DSLAM (Digital Subscriber Line Access Multiplexer) ist eine Vermittlungsstelle, die eine Internetverbindung vom Typ DSL (ADSL, VDSL, SDSL...) für einen einzelnen Nutzer bzw. dessen Endgerät bereitstellt. Dem jeweiligen Anschluss des einzelnen Endgeräts an diese Verbindungsstelle ist die eindeutige Line-ID zugeordnet. Der DSLAM ist mit Steckplätzen für sogenannte Linecards ausgerüstet, auf welchen Ports für Anschlüsse, die zu den einzelnen Nutzern gehen, zusammengefasst sind. Jedem dieser Anschlüsse, die zu den einzelnen Nutzern gehen, ist wiederum eine eindeutige Line-ID zugeordnet.

Das Festnetzgerät ist bspw. ein Personal Computer (PC).

Ein Vorteil einen der vorstehend genannten Parameter als eindeutigen Identifikator zu wählen, ist darin zu sehen, dass nur der Netzbetreiber des jeweiligen Verbindungsnetzes auf diese jeweiligen Parameter zugreifen kann und dadurch als Zertifizierungsstelle mit Zertifizierungsdienst zusichern kann, dass eine Anfrage von einem bestimmten Kommunikationsnetz und darin lokalisiertem bzw. mit diesem verbundenen Endgerät bzw. Nutzer durchgeführt wurde. Ist im Falle eines Festnetzes bzw. Heim-Netzwerks als Kommunikationsnetz das Heim-netzwerk durch eine Software-Defined Network nicht mehr durch einen Router des Nutzers zuhause verwaltet, sondern übernimmt ein System in der Cloud des Netzbetreibers des Verbindungsnetzes die Verwaltung des Heimnetzwerks hat das System weiterhin die Möglichkeit, auf eine dem jeweiligen Endgerät des Nutzers im Heimnetzwerk zugeordnete MAC-Adresse zuzugreifen. Daraus ergibt sich eine eindeutige Zuordnung sowohl im Mobilfunknetzwerk als auch im Heimnetzwerk von Anfrage und Endgerät bzw. Nutzer.

Weiterhin ist es durch die Erfindung möglich, eine zusätzliche Ende-zu-Ende Verschlüsselung neben der bereits vorhandenen und voranstehend genannten Transport-Verschlüsselung einzuführen. Dadurch wird verhindert, dass durch sogenannte Man-in-the-Middle Attacken über eine Verbindung zu transportierende Daten durch Entschlüsselung in einem Transport Layer des Verbindungsnetzes Dritten ungehindert zur Verfügung stehen. Solche Man-in-the-Middle Attacken können in öffentlichen Hotspots und/oder in frei verfügbaren WLANs an öffentlichen Orten schnell passieren.

In weiterer Ausgestaltung des erfindungsgemäßen Verfahrens wird die Anfrage als HTTP-Anfrage ausgesendet.

In einer noch weiteren Ausgestaltung der Erfindung ist das Zielsystem bzw. Backend-System ein Webserver oder ein Webportal und das Verbindungsnetz ein IMS.

Ein weiterer Gegenstand der Erfindung ist ein System zur Authentifizierung eines Endgeräts eines Nutzers bei Nutzung eines von einem Zielsystem über ein Verbindungsnetz bereitgestellten Dienstes. Das erfindungsgemäße System umfasst einen Zertifizierungsdienst und eine mit dem Zertifizierungsdienst in Verbindung stehende Zertifikatserstellungseinheit und ist dazu konfiguriert, gemeinsam mit dem Endgerät des Nutzers und dem Zielsystem ein erfindungsgemäßes Verfahren auszuführen.

In vorteilhafter Ausgestaltung ist der Zertifizierungsdienst in dem Verbindungsnetz lokalisiert und mit einer Routingeinheit des Verbindungsnetzes, die die von dem Endgerät ausgesendete Anfrage durch das Verbindungsnetz routet, verbindbar oder verbunden.

In weiterer Ausgestaltung umfasst das System auch das Endgerät des Nutzers, die Routingeinheit und/oder das Zielsystem.

In weiterer Ausgestaltung des erfindungsgemäßen Verfahrens bzw. des erfindungsgemäßen Systems ist das Verbindungsnetz als IMS (IP Multimedia Subsystem) bzw. als IP-basiertes Vermittlungsnetz ausgebildet und bietet so einen standardisierten Zugriff auf Dienste aus unterschiedlichen Netzwerken. Die Nutzung von IMS ermöglicht eine Verbindung von klassischen Netzen als Kommunikationsnetze, wie Mobilfunknetzen nach GSM- oder UMTS-Standard oder herkömmlichen analogen oder digitalen (ISDN-)Telefonnetzen, mit IPbasierten Netzen und/oder mit IP basierten Dienste-Plattformen als jeweiligen Zielsystemen. Eine jeweilige Verbindung zu oder zwischen verschiedenartigen Kommunikationsnetzen wird durch Media-Gateways geschaffen. Demnach spielt es keine Rolle, aus welchem Kommunikationsnetz ein Nutzer mit seinem mit dem jeweiligen Kommunikationsnetz verbundenen Endgerät auf von einem mit IMS in Verbindung stehenden Zielsystem bereitgestellte Dienste und Anwendungen zugreift.

Kurz gesagt, ist IMS eine Vermittlungstechnik für IP-basierte Multimedia-Anwendungen im Festnetz und Mobilfunknetz. IMS kann alle Kommunikationsdienste auf einer Plattform zusammenfassen, um vielseitige IP-basierte Kommunikationsdienste zu ermöglichen. Die IMS-Netzarchitektur besteht aus vier Schichten: Anwendungsschicht (Service/Application Layer), Sitzungsschicht (IMS Layer), Transportschicht (Transport Layer) und Zugangsschicht (Endgeräte), wobei die Sitzungsschicht zwischen Transportschicht und Anwendungsschicht angeordnet ist.

Das erfindungsgemäße Verfahren setzt voraus, dass zwei zusätzliche Einheiten, nämlich der Zertifizierungsdienst und die Zertifikatserstellungseinheit vorgesehen werden, die mit dem Verbindungsnetz, d.h. mit dem Core Netzwerk des Netzbetreibers, kurz auch Carrier genannt, in Verbindung stehen oder von denen zumindest der Zertifizierungsdienst und optional auch die Zertifikatserstellungseinheit dem Verbindungsnetz hinzugefügt werden. Im Application Layer des Verbindungsnetzes des Carrier wird der Zertifizierungsdienst implementiert und bereitgestellt, der jede Anfrage bzw. jeden Request aus den jeweiligen Kommunikationsnetzwerken und den darin lokalisierten bzw. mit diesen jeweils verbundenen Endgeräten der Nutzer durch ein jeweiliges nutzerspezifisches Zertifikat signiert. Voraussetzung ist, dass die Anfrage von einem bekannten Endgerät eines Nutzers, d.h. von einem bereits in dem Verbindungsnetz des Carriers registrierten (subscribed) Endgerät stammt und über den Transport Layer in ein Core Routing System des IMS Layer des Verbindungsnetzes, also an die Routingeinheit des Verbindungsnetzes, weitergeleitet wird. Das Core Routing System des IMS Layer leitet die Metadaten jeder Anfrage und den eindeutigen Identifikator des Endgeräts des Nutzers an den Zertifizierungsdienst im Application Layer weiter, der daraufhin anhand der Metadaten bzw. zumindest eines Teils der Metadaten und des eindeutigen Identifikators die Anfrage zusätzlich signiert und ggf. verschlüsselt. Die Zertifikate selbst werden von der Zertifikatserstellungseinheit ausgestellt, um für andere Systeme sicherzustellen, dass das übertragene Zertifikat wirklich korrekt und von einer vertraulichen Instanz ausgestellt wurde. Dadurch ist es möglich, eine Authentifizierung von einem Nutzer bzw. User bzw. von dessen Endgerät nicht an einen Username und ein Passwort zu binden. Vielmehr kann mit Hilfe des bereitgestellten endgeräte- und/oder nutzerspezifischen Zertifikats und dazugehörigen eindeutigen Parametern, wie der IMSI und/oder der MSISDN bzw. der Line-ID, auch ein automatischer Login in ein System stattfinden.

Anhand eines möglichen Anwendungsfalls wird die Erfindung im Folgenden weiter erläutert: Ein Kunde einer Bank möchte eine Online Überweisung auf seinem Heim-PC durchführen. Die Bank stellt einen Server als Zielsystem mit einem darauf implementierten Online-Portal bereit und implementiert zusätzlich Sicherheitsmechanismen (z.B. mTan) um festzustellen, ob der entsprechende Überweisungsauftrag auch wirklich durch den Kunden als Nutzer ausgelöst wurde. Das Zielsystem ist über ein IMS als Verbindungsnetz mit dem Heim-PC als Endgerät verbindbar bzw. verbunden, so dass Daten ausgetauscht werden können.

Der Nutzer erstellt auf seinem Heim-PC im Online Portal der Bank einen Online Überweisungsauftrag als Anfrage. Diese Anfrage wird als HTTP-Anfrage durch sein lokales Heim-Netzwerk, wie alle anderen HTTP-Anfragen, über einen in dem Heim-Netzwerk angeordneten Router per Kabel an ein Multifunktionsgehäuse (MFG) weitergeleitet, in dem sich die DSLAMs befinden. Jedem DSLAM ist eine eindeutige Line-ID zugeordnet, mit der sich ein Anschluss eindeutig identifizieren kann. Die HTTP-Anfrage wird weiter durch den Transport Layer des IMS als Verbindungsnetz (Carrier) an das IMS Core Routing System des IMS Layers, d.h. die Routingeinheit des Verbindungsnetzes weitergeleitet. Das IMS Core Routing System hat dann die Aufgabe, die Anfrage an das Zielsystem, nämlich den Server bzw. das Online Portal der Bank weiterzuleiten und die Anfrage dazu zuvor mit einer digitalen Signatur zu versehen. Um die Anfrage zu signieren, werden die Anfrage-Metadaten, von denen einige beispielhaft unter dem https://de.wikipedia.org/wiki/Liste der HTTP-Headerfelder aufgelistet sind und welche auch bei einer Verschlüsselung durch das Endgerät, d.h. den Heim-PC weiterhin sichtbar und demnach für das Verbindungsnetz bzw. die Routingeinheit des Verbindungsnetzes verfügbar sind, an den Zertifizierungsdienst weitergeleitet. Weiterhin stellt das Core Routing System des IMS Layers die eindeutigen IDs, nämlich die IMSI und die MSISDN oder die Line-ID für das Endgerät, hier den Heim-PC bereit. Der Zertifizierungsdienst signiert die Anfrage mit Hilfe der bereitgestellten Daten und verwendet für die Signierung das Zertifikat, welches von der Zertifikatserstellungseinheit bereitgestellt wird bzw. wurde. Die Zertifikatserstellungseinheit erstellt für zumindest einen dem jeweiligen Endgerät zugeordneten eindeutigen Identifikator, wie hier für die Line-ID, ein Zertifikat in einem Public-Key-Verfahren. Dazu verwendet die Zertifikatserstellungseinheit zumindest einen Teil der bereitgestellten Metadaten. Die Signatur wird vom Core Routing System des IMS Layers an die bestehende Anfrage angehängt und zum Zielsystem, hier dem Online-Portal der Bank weitergeleitet. Das Zielsystem hat dann die Möglichkeit, die Signatur, d.h. das Zertifikat dahingehend zu überprüfen, ob die Anfrage genau von einen bestimmten Endgerät bzw. einem bestimmten Nutzer gesendet wurde oder nicht. Die Überprüfung findet anhand einer Prüfung mit dem Public Key aus der Zertifikatserstellungseinheit statt. Grundvoraussetzung ist, dass im Zielsystem, d.h. im Online-Portal der Bank, einmalig das Endgerät legitimiert oder freigeschaltet wurde.

Weiterhin hat die Internetplattform, hier das Online-Portal der Bank die Möglichkeit, aktiv beim Zertifizierungsdienst anzufragen, um die Prüfung des Zertifikats, d.h. den Zertifikatscheck nicht selbst mit dem von der Zertifikatserstellungseinheit bereitgestellten Public Key durchzuführen, sondern diese Prüfung bzw. diesen Check vom Zertifizierungsdienst durchführen zu lassen. Dies bietet den Vorteil, dass die Internetplattform keine eigene Zertifizierungs- oder Verschlüsselungslogik implementieren muss und dass die Anfrage vom Endgerät des Nutzers als Quellsystem bestätigt werden kann.

Mit sogenannten Client-Zertifikaten wird heutzutage auch versucht, ein bestimmtes Endgerät mit Hilfe eines ausgestellten Zertifikats genau zu identifizieren. Mit dem Client-Zertifikat werden zusätzlich alle Anfragen zu einem Zielsystem bzw. zu einem von dem Zielsystem bereitgestellten Dienst (Service) signiert und ggf. verschlüsselt. Client-Zertifikate werden allerdings meist nicht von einer öffentlichen Zertifikatserstellungseinheit erstellt und stellen ein Sicherheitsproblem dar, sobald ein Dritter Zugriff auf das Zertifikat mit zugehörigem privaten Schlüssel (Private Key) hat. Durch den Zugriff hat ein Dritter die Möglichkeit, sich gegenüber dem Zielsystem als eigentlicher Nutzer auszugeben, ohne dass das Zielsystem überprüfen kann, von welchem Endgerät die Anfrage erfolgt.

Durch die vorliegend beschriebene Erfindung ist es nun möglich, ein Zertifikat speziell für ein Endgerät eines Nutzers/Users auszustellen, wobei die Informationen zur Erstellung des Zertifikats, d.h. insbesondere die Metadaten, die aus der Anfrage extrahiert wurden, nur dem Verbindungsnetz bzw. dem Carrier des Verbindungsnetzes zur Verfügung stehen und nicht einfach von Dritten kopiert werden können.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

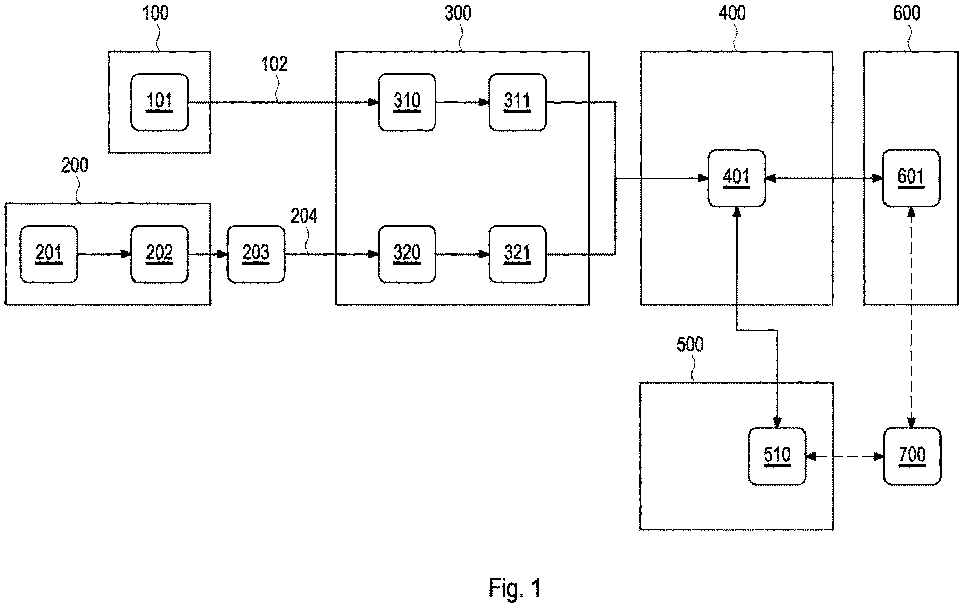

Die Erfindung ist anhand eines Ausführungsbeispiels in der Zeichnung schematisch dargestellt und wird im Folgenden unter Bezugnahme auf die Zeichnung ausführlich beschrieben. Es zeigt
- Fig. 1: ein Blockdiagramm zur Darstellung einer Ausführungsform des erfindungsgemäßen Verfahrens mit Hilfe eines erfindungsgemäßen Systems.

Fig. 1 zeigt ein Blockdiagramm zur Darstellung einer Ausführungsform des erfindungsgemäßen Verfahrens mit Hilfe eines erfindungsgemäßen Systems.

Ein Nutzer möchte einen von einem in einer öffentlichen Infrastruktur (Public Services) eingebundenen Zielsystem 600 auf einer Internetplattform 601 bereitgestellten Dienst nutzen. Die Internetplattform 601 implementiert zusätzlich Sicherheitsmechanismen, um festzustellen ob die zur Nutzung des Dienstes gestellte Anfrage auch wirklich durch den Nutzer bzw. über dessen Endgerät 101, 201 ausgelöst wurde.

Der Nutzer kann die Anfrage auf seinem PC 201, der sich in seinem Heim-Netzwerk 200 als Kommunikationsnetz befindet, oder mit Hilfe seines mobilen Endgeräts 101, das sich in einem Mobilfunknetz 100 als Kommunikationsnetz befindet, erstellen. Stellt der Nutzer die Anfrage auf seinem PC 201, so wird die Anfrage durch sein lokales Heim-Netzwerk 200 als HTTP-Anfrage über einen sich im Heim-Netzwerk 200 befindlichen Router 202 an ein Multifunktionsgerät, MFG, per Kabel weitergeleitet, in dem sich die DSLAMs 203 befinden. Jedem DSLAM 203 ist eine eindeutige Line-ID 204 als eindeutiger Identifikator zugeordnet, mit der sich ein Anschluss eindeutig identifizieren kann. Die HTTP-Anfrage wird weiter an ein Verbindungsnetz, hier ein IMS, geleitet. Dabei wird die HTTP-Anfrage über eine Schnittstelle, insbesondere ein Broadband Network Gateway, BNG, 320 und einen Router 321 durch einen Transport-Layer 300 des Verbindungsnetzes an eine Routingeinheit des Verbindungsnetzes, d.h. an ein IMS Core Routing System 401 eines IMS Layers 400 des Verbindungsnetzes weitergeleitet.

Alternativ kann der Nutzer seine Anfrage ausgehend von seinem Mobilfunkgerät 101 aussenden. Dabei werden über eine Verbindung zu einer im Transport Layer 300 angeordneten Funkstelle, BTS, 310 die dem Endgerät 101 eindeutig zugeordneten Parameter IMSI und MSISDN, hier gemeinsam mit dem Bezugszeichen 102 bezeichnet, bereitgestellt. Sowohl die IMSI als auch die MSISDN oder eine Kombination daraus können jeweils als eindeutiger Identifikator verwendet werden. Die Anfrage wird dann ausgehend von der Funkstelle 310 über einen Router 311 an das IMS Core Routing System 401 in dem IMS Layer 400 weitergeleitet.

Das IMS Core Routing System 401 hat dann die Aufgabe, die Anfrage an das in der öffentlichen Infrastruktur 600 eingebundene Zielsystem 601, hier an die darüber bereitgestellte Internetplattform 601 weiterzuleiten und die Anfrage zuvor mit einer digitalen Signatur zu versehen. Um die Anfrage zu signieren, werden Metadaten der Anfrage, von denen einige bspw. unter dem link https://de.wikipedia.org/wiki/Liste der HTTP-Headerfelder zu finden sind, welche auch bei einer Verschlüsselung durch das Endgerät 201, 101 weiterhin sichtbar sind, an einen Zertifizierungsdienst 510 im Application Layer 500 des Verbindungsnetzes weitergeleitet. Weiterhin stellt das IMS Core Routing System 401 die jeweiligen eindeutigen IDs 102, 204 als eindeutige Identifikatoren für das jeweilige Endgerät 101, 201 bereit. Der Zertifizierungsdienst 510 signiert die Anfrage mit einem Zertifikat, das mit Hilfe der bereitgestellten Metadaten und der je nach Endgerät bereitgestellten eindeutigen IDs 102, 204 erstellt wird. Die Metadaten und die eindeutigen IDs 102, 204 werden von dem Zertifizierungsdienst 510 einer Zertifikatserstellungseinheit 700 bereitgestellt, die wiederum das Zertifikat erstellt und bereitgestellt. Die Zertifikatserstellungseinheit 700 erstellt für jede eindeutige ID 102, 204 eines jeweiligen Endgeräts 101, 201 ein Zertifikat in einem Public-Key-Verfahren. Die Signatur bzw. das Zertifikat wird vom IMS Core Routing System 401 an die Anfrage des jeweiligen Endgeräts 101, 201 angehängt und zum Zielsystem 601 weitergeleitet. Das Zielsystem 601 hat dann die Möglichkeit, das Zertifikat bzw. die Signatur dahingehend zu überprüfen, ob die Anfrage genau von einen bestimmten Endgerät 101, 201 des Nutzers gesendet wurde oder nicht. Die Überprüfung findet anhand einer Prüfung mit dem Public Key, der von der Zertifikatserstellungseinheit 700 bereitgestellt wird, statt. Grundvoraussetzung ist, dass im Zielsystem 601 einmalig das Endgerät 101, 201 legitimiert oder freigeschaltet wurde.

Weiterhin hat die Internetplattform 601 die Möglichkeit, aktiv beim Zertifizierungsdienst 510 anzufragen, um die Prüfung des Zertifikats, d.h. den Zertifikatcheck nicht selbst mit dem von der Zertifikatserstellungseinheit 700 bereitgestellten Public Key durchzuführen, sondern diesen Check vom Zertifizierungsdienst 510 durchführen zu lassen. Dies bietet den Vorteil, dass die Internetplattform 601 keine eigene Zertifizierungs- oder Verschlüsselungslogik implementieren muss und dass die Anfrage bestätigt werden kann.

Dargestellte Pfeile stellen jeweilige Daten- und/oder Sprachverbindungen dar. Doppelpfeile weisen dabei auf bidirektionale Verbindungen hin.

### Bezugszeichenliste

- 100: Mobilfunknetz
- 101: mobiles Endgerät
- 102: IMSI, MSISDN
- 200: Heim-Netzwerk
- 201: PC
- 202: Router
- 203: DSLAM
- 204: Line-ID
- 300: Transport Layer
- 310: BTS
- 311: Router
- 320: BNG
- 321: Router
- 400: IMS Layer
- 401: IMS Core Routing System
- 500: Application Layer
- 510: Zertifizierungsdienst
- 600: Public Services/öffentliche Infrastruktur
- 601: Zielsystem
- 700: Zertifikatserstellungseinheit

## Patentansprüche

1. Verfahren zur Authentifizierung eines Endgeräts (101, 201) eines Nutzers bei Nutzung eines von einem Zielsystem (601) über ein Verbindungsnetz (300, 400, 500) bereitgestellten Dienstes, bei dem
- eine von dem Nutzer über das mit einem Kommunikationsnetz (100, 200) verbundene Endgerät (101, 201) ausgesendete Anfrage zur Nutzung des Dienstes in dem Verbindungsnetz (300, 400, 500) erfasst wird, von einer Routingeinheit (401) des Verbindungsnetzes (300, 400, 500) Metadaten aus der erfassten Anfrage extrahiert und die Metadaten von der Routingeinheit (401) an einen Zertifizierungsdienst (510) des Verbindungsnetzes weitergeleitet werden;
- der Zertifizierungsdienst (510) die Metadaten empfängt und die Metadaten zusammen mit einem für das Endgerät (101, 201) eindeutigen Identifikator (102, 204) einer Zertifikatserstellungseinheit (700) bereitstellt;
- die Zertifikatserstellungseinheit (700) für den eindeutigen Identifikator (102, 204) mittels der bereitgestellten Metadaten ein Zertifikat erstellt und dem Zertifizierungsdienst (510) bereitstellt;
- die mit dem Zertifizierungsdienst (510) verbundene Routingeinheit (401) das Zertifikat an die Anfrage anhängt und an das Zielsystem (601) überträgt;
- das Zielsystem (601) das die Anfrage aussendende Endgerät (101, 201) mittels des Zertifikats authentifiziert.

2. Verfahren nach Anspruch 1, bei dem das durch die Zertifikatserstellungseinheit (700) erstellte Zertifikat in einem Private-Public-Key-Verfahren verifizierbar ist, wobei dem Zertifikat entsprechend ein Private Key und ein Public Key zugeordnet werden und die Zertifikatserstellungseinheit (700) zur Verifizierung des erstellten Zertifikats den dem erstellten Zertifikat zugeordneten Public-Key bereitstellt.

3. Verfahren nach Anspruch 1 oder 2, bei dem das Endgerät (101, 201) in dem Zielsystem (601) einmalig legitimiert und/oder zur Nutzung des Dienstes freigeschaltet wird.

4. Verfahren nach einem der Ansprüche 2 bis 3, bei dem die Authentifizierung des die Anfrage aussendenden Endgeräts (101, 201) mittels des Zertifikats umfasst, dass das Zertifikat einer Prüfung mittels des bereitgestellten Public-Keys unterzogen wird und dass das die Anfrage aussendende Endgerät anhand des Prüfungsergebnisses authentifiziert wird.

5. Verfahren nach Anspruch 4, bei dem das Zielsystem (601) zur Prüfung des Zertifikats eine Prüfungsanfrage an den Zertifizierungsdienst (510) übermittelt und der Zertifizierungsdienst (510) das Zertifikat mittels des bereitgestellten Public-Keys prüft und an das Zielsystem (601) das Prüfungsergebnis übermittelt und das Zielsystem (601) anhand des Prüfungsergebnisses das die Anfrage aussendende Endgerät (101, 201) authentifiziert.

6. Verfahren nach Anspruch 4, das Zielsystem (601) das Zertifikat mittels des bereitgestellten Public-Keys prüft und anhand des Prüfungsergebnisses das die Anfrage aussendende Endgerät (101, 201) authentifiziert.

7. Verfahren nach einem der Ansprüche 4 bis 6, bei dem das Authentifizieren des die Anfrage aussendenden Endgeräts (101, 201) umfasst, dass das Zielsystem (601) anhand des Prüfungsergebnisses feststellt, ob das die Anfrage aussendende Endgerät (101, 201) ein zuvor legitimiertes und/oder für den Dienst freigeschaltetes Endgerät (101, 201) ist oder nicht.

8. Verfahren nach einem der voranstehenden Ansprüche, bei dem das Endgerät (101, 201) des Nutzers als ein mobiles Endgerät (101) mit einer dem Nutzer zugeordneten SIM gewählt wird und das Kommunikationsnetz, mit dem das Endgerät (101) verbunden ist, ein Mobilfunknetz (100) ist, und der eindeutige Identifikator (102) gewählt wird als eine dem Endgerät (101) des Nutzers zugeordnete IMSI oder eine dem Endgerät (101) des Nutzers zugeordnete MSISDN oder eine Kombination aus IMSI und MSISDN.

9. Verfahren nach einem der Ansprüche 1 bis 7, bei dem das Endgerät des Nutzers als ein Festnetzgerät (201) gewählt wird und das Kommunikationsnetz, mit dem das Festnetzgerät (201) verbunden ist, ein Festnetz (200) ist, und der eindeutige Identifikator gewählt wird als eine Line-ID (204), die einem Anschluss des Endgeräts (201) an eine Verbindungsstelle des Festnetzes (200) eindeutig zugeordnet ist.

10. Verfahren nach einem der voranstehenden Ansprüche, bei dem die Anfrage als HTTP-Anfrage ausgesendet wird.

11. Verfahren nach einem der voranstehenden Ansprüche, bei dem das Zielsystem (601) ein Webserver oder ein Webportal und das Verbindungsnetz ein IMS ist.

12. System zur Authentifizierung eines Endgeräts (101, 201) eines Nutzers bei Nutzung eines von einem Zielsystem (601) über ein Verbindungsnetz (300, 400, 500) bereitgestellten Dienstes, welches eine Routingeinheit (401) des Verbindungsnetzes, einen Zertifizierungsdienst (510) und eine mit dem Zertifizierungsdienst (510) in Verbindung stehende Zertifikatserstellungseinheit (700) umfasst und konfiguriert ist, gemeinsam mit dem Endgerät (101, 201) des Nutzers und dem Zielsystem (601) ein Verfahren nach einem der Ansprüche 1 bis 11 auszuführen.

13. System nach Anspruch 12, bei dem der Zertifizierungsdienst (510) in dem Verbindungsnetz lokalisiert ist und mit der Routingeinheit (401) des Verbindungsnetzes, die die von dem Endgerät (101, 201) ausgesendete Anfrage durch das Verbindungsnetz routet, verbindbar oder verbunden ist.

14. System nach Anspruch 12 oder 13, das ferner mindestens eine der folgenden Komponenten umfasst: das Endgerät (101, 201) des Nutzers, die Routingeinheit (401), das Zielsystem (601).

15. Computerprogrammprodukt zur Authentifizierung eines Endgeräts (101, 201) eines Nutzers bei Nutzung eines von einem Zielsystem (601) über ein Verbindungsnetz (300, 400, 500) bereitgestellten Dienstes, mit einem Speichermedium und einem in dem Speichermedium gespeicherten Programm mit Programmcodes, die einen Zertifizierungsdienst (510) und eine Zertifikatserstellungseinheit implementieren, wobei das Programm einen Rechner veranlasst, für ein Verfahren nach einem der Ansprüche 1 bis 11 einen Zertifizierungsdienst (510) und eine Zertifikatserstellungseinheit (700) bereitzustellen, wenn das Programm von einem Prozessor des Rechners ausgeführt wird.

## Claims

1. A method for authenticating a terminal (101, 201) of a user when using a service provided by a target system (601) via a connection network (300, 400, 500), wherein
- a request for using the service sent by the user via the terminal (101, 201) connected to a communication network (100, 200) is captured in the connection network (300, 400, 500), metadata is extracted from the captured request by a routing unit (401) of the connection network (300, 400, 500) and the metadata is forwarded by the routing unit (401) to a certification service (510) of the connection network;
- the certification service (510) receives the metadata and provides the metadata together with an identifier (102, 204) unique to the terminal (101, 201) to a certificate creation unit (700);
- the certificate creation unit (700) creates a certificate for the unique identifier (102, 204) by means of the provided metadata and provides it to the certification service (510);
- the routing unit (401) connected to the certification service (510) attaches the certificate to the request and transmits it to the target system (601);
- the target system (601) authenticates the terminal (101, 201) sending the request by means of the certificate.

2. The method according to claim 1, wherein the certificate created by the certificate creation unit (700) is verifiable in a private-public key method, wherein a private key and a public key are correspondingly assigned to the certificate and the certificate creation unit (700) provides the public key assigned to the created certificate for verifying the created certificate.

3. The method according to claim 1 or 2, wherein the terminal (101, 201) is legitimized and/or enabled once to use the service in the target system (601).

4. The method according to one of claims 2 to 3, wherein the authentication of the terminal (101, 201) sending the request by means of the certificate comprises subjecting the certificate to a check by means of the provided public key and authenticating the terminal sending the request based on the check result.

5. The method according to claim 4, wherein the target system (601) transmits a check request to the certification service (510) to check the certificate and the certification service (510) checks the certificate by means of the provided public key and transmits the check result to the target system (601) and the target system (601) authenticates the terminal (101, 201) sending the request based on the check result.

6. The method according to claim 4, wherein the target system (601) checks the certificate using the provided public key and authenticates the terminal (101, 201) sending the request based on the check result.

7. The method according to one of claims 4 to 6, wherein authenticating the terminal (101, 201) sending the request comprises that, based on the check result, the target system (601) determines whether or not the terminal (101, 201) sending the request is a terminal (101, 201) previously legitimized and/or enabled for the service.

8. The method according to one of the preceding claims, wherein the terminal (101, 201) of the user is selected as a mobile terminal (101) having a SIM assigned to the user and the communication network to which the terminal (101) is connected is a mobile network (100), and the unique identifier (102) is selected as an IMSI assigned to the terminal (101) of the user or an MSISDN assigned to the terminal (101) of the user or a combination of IMSI and MSISDN.

9. The method according to one of claims 1 to 7, wherein the terminal of the user is selected as a fixed network device (201) and the communication network to which the fixed network device (201) is connected is a fixed network (200), and the unique identifier is selected as a line ID (204) uniquely assigned to a connection of the terminal (201) to a connection point of the fixed network (200).

10. The method according to one of the preceding claims, wherein the request is sent out as an HTTP request.

11. The method according to one of the preceding claims, wherein the target system (601) is a web server or a web portal and the connection network is an IMS.

12. A system for authenticating a terminal (101, 201) of a user when using a service provided by a target system (601) via a connection network (300, 400, 500), which comprises a routing unit (401) of the connection network, a certification service (510) and a certificate creation unit (700) in connection with the certification service (510) and is configured to carry out, together with the terminal (101, 201) of the user and the target system (601), a method according to one of claims 1 to 11.

13. The system according to claim 12, wherein the certification service (510) is localized in the connection network and is connectable or connected to the routing unit (401) of the connection network which routes the request sent out by the terminal (101, 201) through the connection network.

14. The system according to claim 12 or 13, further comprising at least one of the following components: the terminal (101, 201) of the user, the routing unit (401), the target system (601).

15. A computer program product for authenticating a terminal (101, 201) of a user when using a service provided by a target system (601) via a connection network (300, 400, 500), having a storage medium and a program with program codes stored in the storage medium, which program codes implement a certification service (510) and a certificate creation unit, wherein the program causes a computer to provide a certification service (510) and a certificate creation unit (700) for a method according to one of claims 1 to 11 when the program is executed by a processor of the computer.

## Revendications

1. Procédé d'authentification d'un terminal (101, 201) d'un utilisateur lors de l'utilisation d'un service fourni par un système cible (601) par l'intermédiaire d'un réseau de connexion (300, 400, 500), dans lequel
- une demande d'utilisation du service dans le réseau de connexion (300, 400, 500), émise par l'utilisateur au moyen du terminal (101, 201) connecté à un réseau de communication (100, 200), est captée, des métadonnées sont extraites de la demande captée par une unité de routage (401) du réseau de connexion (300, 400, 500) et les métadonnées sont transmises par l'unité de routage (401) à un service de certification (510) du réseau de connexion ;
- le service de certification (510) reçoit les métadonnées et fournit les métadonnées ainsi qu'un identifiant unique (102, 204) pour le terminal (101, 201) à une unité de génération de certificat (700) ;
- l'unité de génération de certificat (700) génère un certificat pour l'identifiant unique (102, 204) au moyen des métadonnées fournies et le met à disposition du service de certification (510) ;
- l'unité de routage (401) connectée au service de certification (510) ajoute le certificat à la demande et le transmet au système cible (601) ;
- le système cible (601) authentifie, au moyen du certificat, le terminal (101, 201) émettant la demande.

2. Procédé selon la revendication 1, dans lequel le certificat généré par l'unité de génération de certificat (700) peut être vérifié par un procédé de clé publique / clé privée, une clé privée et une clé publique étant associées au certificat en conséquence, et l'unité de génération de certificat (700) mettant à disposition la clé publique associée au certificat généré, pour vérification du certificat généré.

3. Procédé selon la revendication 1 ou 2, dans lequel le terminal (101, 201) est autorisé et/ou activé une seule fois dans le système cible (601) pour l'utilisation du service.

4. Procédé selon l'une des revendications 2 à 3, dans lequel l'authentification du terminal (101, 201) émettant la demande, au moyen du certificat, comprend la soumission du certificat à une vérification au moyen de la clé publique mise à disposition et l'authentification du terminal émettant la demande, sur la base du résultat de la vérification.

5. Procédé selon la revendication 4, dans lequel le système cible (601) transmet une demande de vérification au service de certification (510) pour la vérification du certificat et le service de certification (510) vérifie le certificat au moyen de la clé publique mise à disposition et transmet au système cible (601) le résultat de la vérification et le système cible (601) authentifie le terminal (101, 201) émettant la demande, à l'aide du résultat de la vérification.

6. Procédé selon la revendication 4, dans lequel le système cible (601) vérifie le certificat au moyen de la clé publique mise à disposition et authentifie le terminal (101, 201) émettant la demande, à l'aide du résultat de la vérification.

7. Procédé selon l'une des revendications 4 à 6, dans lequel l'authentification du terminal (101, 201) émettant la demande comprend la détermination, par le système cible (601) à l'aide du résultat de la vérification, de la question de savoir si le terminal (101, 201) émettant la demande est ou n'est pas un terminal (101, 201) préalablement autorisé et/ou activé pour le service.

8. Procédé selon l'une des revendications précédentes, dans lequel le terminal (101, 201) de l'utilisateur est sélectionné à titre d'un terminal mobile (101) ayant une carte SIM associée à l'utilisateur et le réseau de communication auquel le terminal (101) est connecté est un réseau mobile (100), et l'identifiant unique (102) est sélectionné à titre d'un IMSI associé au terminal (101) de l'utilisateur, un MSISDN associé au terminal (101) de l'utilisateur ou une combinaison d'IMSI et de MSISDN.

9. Procédé selon l'une des revendications 1 à 7, dans lequel le terminal de l'utilisateur est sélectionné à titre d'un terminal de réseau fixe (201), le réseau de communication auquel le terminal de réseau fixe (201) est connecté est un réseau fixe (200) et l'identifiant unique est sélectionné à titre d'un identifiant de ligne (204) associé de manière unique à une connexion du terminal (201) avec un point de connexion du réseau fixe (200).

10. Procédé selon l'une des revendications précédentes, dans lequel la demande est envoyée à titre d'une demande HTTP.

11. Procédé selon l'une des revendications précédentes, dans lequel le système cible (601) est un serveur Web ou un portail Web et le réseau de connexion est un IMS.

12. Système d'authentification d'un terminal (101, 201) d'un utilisateur lors de l'utilisation d'un service fourni par un système cible (601) par l'intermédiaire d'un réseau de connexion (300, 400, 500), comprenant une unité de routage (401) du réseau de connexion, un service de certification (510) et une unité de génération de certificat (700) communiquant avec le service de certification (510), et configuré pour mettre en oeuvre, conjointement avec le terminal (101, 201) de l'utilisateur et le système cible (601), un procédé selon l'une des revendications 1 à 11.

13. Système selon la revendication 12, dans lequel le service de certification (510) est localisé dans le réseau de connexion et peut être connecté ou est connecté à l'unité de routage (401) du réseau de connexion qui achemine la demande émise par le terminal (101, 201) à travers le réseau de connexion.

14. Système selon la revendication 12 ou 13, comprenant en outre au moins l'un des éléments suivants : le terminal (101, 201) de l'utilisateur, l'unité de routage (401), le système cible (601).

15. Produit de programme informatique destiné à authentifier un terminal (101, 201) d'un utilisateur lors de l'utilisation d'un service fourni par un système cible (601) par l'intermédiaire d'un réseau de connexion (300, 400, 500), le produit comportant un support de stockage et un programme contenant des codes de programme stockés sur le support de stockage, mettant en oeuvre un service de certification (510) et une unité de génération de certificat, le programme amenant un ordinateur à fournir un service de certification (510) et une unité de génération de certificat (700) pour un procédé selon l'une des revendications 1 à 11, lorsque le programme est exécuté par un processeur de l'ordinateur.
